# EUROPÄISCHE PATENTSCHRIFT

(11) **EP 2 274 124 B1**
(45) Veröffentlichungstag und Bekanntmachung des Hinweises auf die Patenterteilung: **28.11.2012**
(21) Anmeldenummer: 09741879.2
(22) Anmeldetag: 06.05.2009
(51) Int. Cl.: B23B 31/26

(54) **WERKZEUGHALTER UND WERKZEUGMASCHINE MIT ARBEITSSPINDEL UND WERKZEUGHALTER**
TOOL HOLDER AND MACHINE TOOL HAVING WORKING SPINDLE AND TOOL HOLDER
PORTE-OUTIL ET MACHINE-OUTIL AVEC BROCHE DE TRAVAIL ET PORTE-OUTIL

(30) Priorität: 06.05.2008 DE 102008022405
(43) Veröffentlichungstag der Anmeldung: 19.01.2011
(73) Patentinhaber: Bielomatik Leuze Gmbh + Co. Kg, 72639 Neuffen (DE)
(72) Erfinder: KEPPLER, Jürgen, 72793 Pfullingen (DE)
(74) Vertreter: Greif, Thomas
(86) Internationale Anmeldenummer: PCT/EP2009/003236
(87) Internationale Veröffentlichungsnummer: WO 2009/135660

(56) Entgegenhaltungen:
- EP-A- 1 561 539
- EP-A- 1 813 369

## Beschreibung

Die Erfindung betrifft einen Werkzeughalter zur Ankopplung eines Werkzeugs an eine Arbeitsspindel einer Werkzeugmaschine mit einem Spannfutter für ein Werkzeug und einer Einrichtung zur Zuführung eines Kühl- und/oder Schmiermediums zu dem Werkzeug, wobei
- im Spannfutter ein zentrales Übergaberohr angeordnet ist, dessen Ausgangsende das Medium an das Werkzeug abgibt,
- sich eingangsseitig an das Übergaberohr eine Rohrdüse anschließt, die eine Kammer bildet, in die eingangsseitig eine Kupplungshülse mündet, die koaxial an eine hohlzylinderförmige Durchführung in der Arbeitsspindel anschließbar ist, und
- die Rohrdüse eingangsseitig zumindest über einen Teil ihrer axialen Länge von einem Übernahmerohr umgeben ist.

Um in Werkzeugmaschinen die Werkzeuge während der Bearbeitung zu kühlen und/oder zu schmieren, ist die sogenannte Minimalmengenschmierung (MMS) bekannt. Das Kühl- und/oder Schmiermedium wird dem Werkzeug durch die Arbeitsspindel und durch das Spannfutter des Werkzeughalters zugeführt, die dazu entsprechende Bohrungen und rohrförmige Kanäle aufweisen. Derartige Werkzeughalter sind in der DE 10 2006 005 665 A1 und der DE 103 12 743 A1 beschrieben. Der Oberbegriff von Anspruch 1 basiert auf der EP 1561 539.

Bei der Minimalmengenschmierung (MMS) unterscheidet man zwei verschiedene Systeme, die bisher auch zwei verschieden gestaltete Schnittstellen zwischen dem Werkzeughalter und der Maschinenspindel erforderlich machen.

Bei dem 1-kanaligen System wird das als Kühl- und/oder Schmiermedium dienende Aerosolgemisch außerhalb der Maschine aufbereitet und dem Werkzeug zugeleitet. Die Erzeugung des schmierfähigen Aerosols erfolgt in einem separaten, an der Werkzeugmaschine angebrachten MMS-Gerät. Die Zufuhr des Aerosols zur Bearbeitungsstelle erfolgt durch eine geeignete Drehdurchführung, insbesondere mit axialem Durchfluss, durch die Arbeitsspindel, das Spannsystem und schließlich das Zerspanwerkzeug.

Beim 2-kanaligen MMS-System werden Schmierstoff und Luft getrennt über zwei Kanäle durch die Werkzeugspindel bis zum Werkzeughalter geführt, wo in einer Mischkammer das benötigte Öl-/Luftgemisch erzeugt wird. Die getrennte Zuführung der beiden Medien in der Arbeitsspindel erfolgt durch eine Mediumlanze mit koaxial angeordneten Leitungen, wobei der Schmierstoff durch den inneren Kanal gefördert, während die Luft über einen äußeren Ringkanal zwischen Mediumlanze und Spindel geführt wird. Das vordere Ende der Lanze ragt in die Mischkammer des Übernahmerohrs. Von dort wird das in der Mischkammer erzeugte Öl-/Luftgemisch mittels eines Übergaberohrs dem Werkzeug zugeführt.

Die derzeit bekannten Lösungen haben den Nachteil, dass es bei einer Verwechslung der Maschinenbestückung zum Crash kommen kann. Eine Verwechslung tritt dann auf, wenn anstelle eines Werkzeughalters, der für ein 2-Kanal-System ausgelegt ist, ein Werkzeughalter für ein 1-Kanal-System eingesetzt wird und umgekehrt. Dann stößt bei der Befestigung des Werkzeughalters an der Arbeitsspindel die Kupplungshülse gegen die Rohrdüse. Vergrößert man zur Kollisionsvermeidung den Durchmesser der Rohrdüse auf den Innendurchmesser des Übernahmerohres so muss aus strömungstechnischen Gründen die Medienlanze bis in den hinteren Teil der Rohrdüse verlängert werden. Die Lanze ragt so über eine gewisse Länge frei und ungeschützt aus der Arbeitsspindel heraus. Dies birgt die inakzeptable Gefahr, dass die Lanze bei fehlendem Werkzeughalter abbricht.

Der Erfindung liegt daher die Aufgabe zugrunde, einen Werkzeughalter der gattungsgemäßen Art so zu verbessern, dass er sicher und ohne Gefahr von Beschädigungen sowohl in einem 1-Kanal-System als auch in einem 2-Kanal-System verwendet werden kann.

Eine weitere Aufgabe der Erfindung besteht darin, eine Werkzeugmaschine mit Arbeitsspindel und einem erfindungsgemäßen Werkzeughalter zu schaffen.

Die erste Aufgabe wird durch einen Werkzeughalter mit folgender Merkmalskombination gelöst:
- Im Spannfutter ist ein zentrales Übergaberohr angeordnet, dessen Ausgangsende das Medium an das Werkzeug abgibt,
- eingangsseitig schließt sich an das Übergaberohr eine Rohrdüse an, die eine Kammer bildet, in die eingangsseitig eine Kupplungshülse mündet, das koaxial an eine hohlzylinderförmige Durchführung in der Arbeitsspindel anschließbar ist,
- die Rohrdüse ist eingangsseitig zumindest über einen Teil ihrer axialen Länge von einem Übernahmerohr umgeben,
- die Rohrdüse weist an ihrem Eingangsende einen geringeren Außendurchmesser auf als der Innendurchmesser des Übernahmerohrs, und
- der Innendurchmesser und der Außendurchmesser der Kupplungshülse sind an deren Ausgangsende so gestaltet, dass das Ende der Kupplungshülse in axialer Richtung in den ringspaltförmigen Zwischenraum zwischen dem Übernahmerohr und der Rohrdüse bewegbar ist.

Patentanspruch 5 löst die zweite Aufgabe.

Die abhängigen Ansprüche enthalten bevorzugte, da besonders vorteilhafte Ausgestaltungen der Erfindung.
- Figur 1: zeigt einen Schnitt durch eine Arbeitsspindel mit eingesetztem Werkzeughalter und Werkzeug,
- Figur 2: zeigt in einem vergrößerten Ausschnitt die Elemente zur Zufuhr des Kühl- und/oder Schmiermediums zu dem Werkzeug.

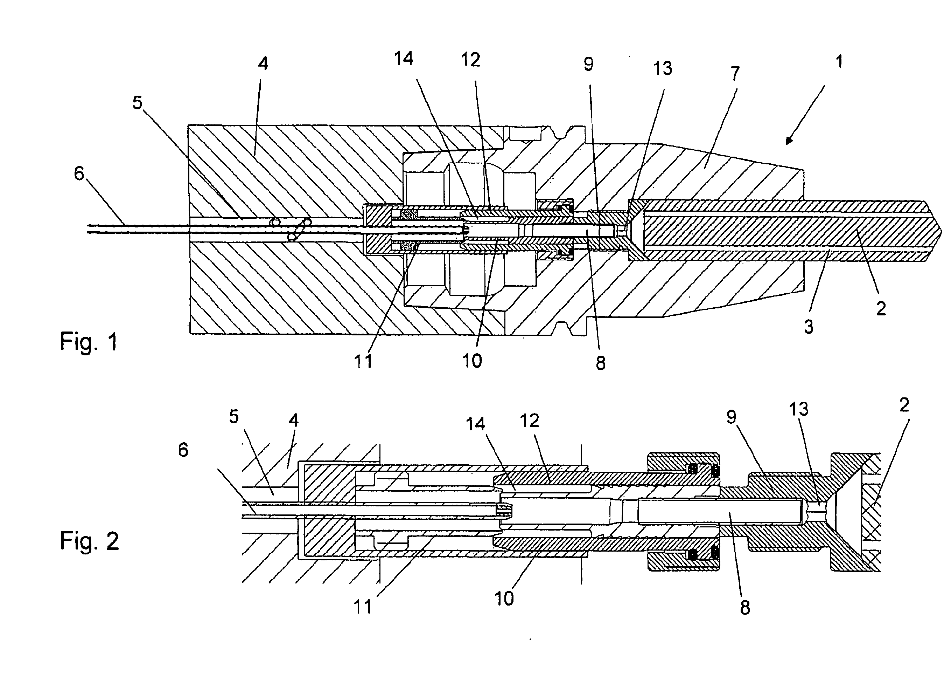

Der in Figur 1 dargestellte Werkzeughalter 1 dient als Halter für ein Werkzeug 2, beispielsweise einem Bohrer. Das Werkzeug 2 weist Kanäle 3 auf, durch die ein Kühl- und/oder Schmiermedium, insbesondere ein Öl-Luft-Gemisch, an die Bearbeitungsstelle des Werkstücks geführt wird. Der Werkzeughalter ist an eine Arbeitsspindel 4 auswechselbar angekuppelt. Die Arbeitsspindel 4 weist eine zentrale, hohlzylinderförmige Durchführung 5 auf, durch die sowohl ein Kühl- oder Schmiermedium zugeführt werden kann, als auch eine Mediumlanze 6 koaxial bis in den Bereich des Werkzeughalters 1 geführt werden kann. Der Werkzeughalter 1 kann sowohl in einem 1-Kanal-System als auch in einem 2-Kanal-System eingesetzt werden. In den Figuren 1 und 2 ist der Aufbau bei einem 2-Kanal-System dargestellt. Beim 2-Kanal-System werden Schmierstoff und Luft getrennt zugeführt. Die Zufuhr von Öl als Schmierstoff erfolgt über die Medienlanze 6, die Zufuhr von Luft durch den Ringkanal in der Durchführung 5 außerhalb der Lanze 6.

Bei Verwendung in einem 1-Kanal-System ist die Mediumlanze 6 entfernt. Die Zufuhr des außerhalb der Maschine aufbereiteten Öl-Luft-Gemischs als Kühl- und/oder Schmiermedium erfolgt durch die Durchführung 5. Ansonsten ist der Aufbau unverändert.

Im Spannfutter 7 ist ein zentrales Übergaberohr 8 angeordnet, dessen Ausgangsende (in den Figuren rechts) das Medium an die Kanäle 3 im Werkzeug 2 abgibt. An seinem Abgabeende ist das Übergaberohr 8 von einer Adapterhülse 9 umgeben, die axial verstellbar ist, um die Länge der Fluidleitung zur Vermeidung von Querschnittssprüngen anzupassen. Die Verstellung der Adapterhülse 9 erfolgt mittels eines Innensechskants 13, der mittels eines Einstellwerkzeugs gedreht werden kann, das von der dem Werkzeug 2 abgewandten Seite zugeführt wird.

Eingangsseitig an das Übergaberohr 8 schließt sich eine Rohrdüse 10 an, die eine Kammer bildet. Die Kammer dient bei dem 2-Kanal-System als Mischkammer, in der Öl und Druckluft gemischt werden. In die Rohrdüse 10 mündet eingangsseitig eine Kupplungshülse 11, an deren anderen Seite die Durchführung 5 der Arbeitsspindel 4 koaxial angeschlossen ist. Ein Fluid kann so von der Durchführung 5 über die Kupplungshülse 11, die Rohrdüse 10, das Übergaberohr 8 und die Adapterhülse 9 den Kanälen 3 im Werkzeug 2 zugeführt werden.

Eingangsseitig ist die Rohrdüse 10 zumindest über einen Teil ihrer axialen Länge von einem Übernahmerohr 12 umgeben. Die Rohrdüse 10 weist an ihrem Eingangsende einen geringeren Außendurchmesser auf als der Innendurchmesser des Übernahmerohrs 12. Es entsteht so eine ringspaltförmige, eingangsseitig offener Zwischenraum 14 zwischen dem Übernahmerohr 12 und der Rohrdüse 10 in den sich beim Anschluss des Werkzeughalters 1 die Kupplungshülse 11 mit ihrem Ende hineinbewegt. Dazu sind der Innendurchmesser und der Außendurchmesser der Kupplungshülse 11 an deren Ausgangsende so gestaltet, dass das Ende der Kupplungshülse 11 in axialer Richtung in den ringspaltförmigen Zwischenraum 14 zwischen dem Übernahmerohr 12 und der Rohrdüse 10 bewegbar ist. Es werden so Kollisionen zwischen der Kupplungshülse 11 und der Rohrdüse 10 vermieden, falls ein Werkzeughalter 1 für ein 1-Kanal-System verwendet wird. Als weiterer Vorteil tritt hinzu, dass die Medienlanze 6 bei der Verwendung in einem 2-Kanal-System nicht oder nur wenig über die Kupplungshülse 11 hinausstehen muss und dennoch in die Rohrdüse 10 bewegt werden kann. Die Kupplungshülse 11 dient somit zugleich als Schutz für die Lanze 6 und verhindert, dass diese bei einem Wechsel des Werkzeughalters 1 abbricht.

Bei einem Einsatz eines 1-Kanal-MMS-Systems ist die Kupplungshülse 11 über die hohlzylinderförmige Durchführung 6 in der Arbeitsspindel 4 an eine Zufuhr für ein Öl-Luft-Gemisch angeschlossen. Bei diesem System ist die Mediumlanze 6 nicht vorhanden.

Bei dem Einsatz in einem 2-Kanal-MMS-System ist in der Kupplungshülse 11 die Mediumlanze 6 angeordnet. Die Mediumlanze 6 erstreckt sich durch die Durchführung 5 in der Arbeitsspindel 4 bis über die Kupplungshülse 11 hinaus und gibt Öl in die eine Mischkammer bildende Rohrdüse 10 ab. Über den Ringkanal zwischen der Lanze 6 und die Kupplungshülse 11 wird Druckluft zugeführt, um mit dem Öl ein Öl-Luft-Gemisch zu bilden, das anschließend den Kanälen 3 des Werkzeugs 2 zugeführt wird.

## Patentansprüche

1. Werkzeughalter (1) zur Ankopplung eines Werkzeugs (2) an eine Arbeitsspindel (4) einer Werkzeugmaschine mit einem Spannfutter (7) für das Werkzeug (2) und einer Einrichtung zur Zuführung eines Kühl- und/oder Schmiermediums zu dem Werkzeug (2), wobei
- im Spannfutter (7) ein zentrales Übergaberohr (8) angeordnet ist, dessen Ausgangsende das Medium an das Werkzeug (2) abgibt,
- sich eingangsseitig an das Übergaberohr (8) eine Rohrdüse (10) anschließt, die eine Kammer bildet, in die eingangsseitig eine Kupplungshülse (11) mündet, das koaxial an eine hohlzylinderförmige Durchführung (5) in der Arbeitsspindel (4) anschließbar ist, und
- die Rohrdüse (10) eingangsseitig zumindest über einen Teil ihrer axialen Länge von einem Übernahmerohr (12) umgeben ist, **dadurch gekennzeichnet, dass**
die Rohrdüse (10) an ihrem Eingangsende einen geringeren Außendurchmesser aufweist als der Innendurchmesser des Übernahmerohrs (12), und
- dass der Innendurchmesser und der Außendurchmesser der Kupplungshülse (11) an deren Ausgangsende so gestaltet sind, dass das Ende der Kupplungshülse (11) in axialer Richtung in den ringspaltförmigen Zwischenraum (14) zwischen dem Übernahmerohr (12) und der Rohrdüse (10) bewegbar ist.

2. Werkzeughalter nach Anspruch 1, **dadurch gekennzeichnet, dass** in einem 1-Kanal-System die Kupplungshülse (11) über die hohlzylinderförmige Durchführung (5) in der Arbeitsspindel (4) an eine Zufuhr für ein Öl-Luft-Gemisch angeschlossen ist.

3. Werkzeughalter nach Anspruch 1, **dadurch gekennzeichnet, dass** in einem 2-Kanal-System in der Kupplungshülse (11) das Ende einer Mediumlanze (6) angeordnet ist, wobei Öl aus der Lanze (6) und Luft aus dem Ringkanal zwischen Lanze (6) und Kupplungshülse (11) in die eine Mischkammer bildende Rohrdüse (10) abgegeben wird.

4. Werkzeughalter nach einem der Ansprüche 1 bis 3, **dadurch gekennzeichnet, dass** das Ausgangsende des Übergaberohrs (8) von einer Adapterhülse (9) umgeben ist, die axial verstellbar ist.

5. Werkzeugmaschine mit einer Arbeitsspindel, die eine axiale Durchführung für ein Kühl- und/oder Schmiermedium aufweist und an die ein Werkzeughalter (1) gemäß einem der Ansprüche 1 bis 4 angekuppelt ist, wobei die Kupplungshülse (11) konzentrisch an die hohlzylinderförmige Durchführung (5) der Arbeitsspindel (4) angeschlossen ist.

## Claims

1. Tool holder (1) for coupling a tool (2) to a working spindle (4) of a machine tool, having a chuck (7) for the tool (2) and a device for supplying a coolant and/or lubricant to the tool (2), wherein
- a central transfer tube (8) is arranged in the chuck (7), the outlet end of said transfer tube (8) delivering the coolant and/or lubricant to the tool (2),
- the transfer tube (8) is adjoined on the inlet side by a tube nozzle (10) which forms a chamber, into the inlet side of which there opens a coupling sleeve (11) which is connectable in a coaxial manner to a hollow-cylindrical through-passage (5) in the working spindle (4), and
- the tube nozzle (10) is surrounded on the inlet side, at least along a part of its axial length, by a receiving tube (12),
**characterized in that**
the tube nozzle (10) has a smaller outside diameter at its inlet end than the inside diameter of the receiving tube (12), and
**in that** the inside diameter and the outside diameter of the coupling sleeve (11) at the outlet end thereof are formed such that the end of the coupling sleeve (11) is movable in the axial direction into the intermediate space (14) in the form of an annular gap between the receiving tube (12) and the tube nozzle (10).

2. Tool holder according to Claim 1, **characterized in that** in a 1-channel system, the coupling sleeve (11) is connected via the hollow-cylindrical through-passage (5) in the working spindle (4) to a supply for an oil/air mixture.

3. Tool holder according to Claim 1, **characterized in that** in a 2-channel system, the end of a coolant and/or lubricant lance (6) is arranged in the coupling sleeve (11), wherein oil is delivered from the lance (6) and air from the annular channel between the lance (6) and the coupling sleeve (11) into the tube nozzle (10), which forms a mixing chamber.

4. Tool holder according to one of Claims 1 to 3, **characterized in that** the outlet end of the transfer tube (8) is surrounded by an adapter sleeve (9) which is axially adjustable.

5. Machine tool having a working spindle which has an axial through-passage for a coolant and/or lubricant and is coupled to a tool holder (1) according to one of Claims 1 to 4, wherein the coupling sleeve (11) is connected in a concentric manner to the hollow-cylindrical through-passage (5) in the working spindle (4).

## Revendications

1. Porte-outil (1) pour l'accouplement d'un outil (2) à une broche de travail (4) d'une machine-outil, comprenant un mandrin de serrage (7) pour l'outil (2) et un dispositif pour acheminer un fluide réfrigérant et/ou un fluide lubrifiant à l'outil (2), dans lequel :
- un tube de transfert central (8) est disposé dans le mandrin de serrage (7), l'extrémité de sortie du tube de transfert délivrant le fluide à l' outil (2),
- une buse tubulaire (10) se raccorde du côté de l'entrée au tube de transfert (8), laquelle forme une chambre dans laquelle débouche, du côté de l'entrée une douille d'accouplement (11) qui peut être raccordée coaxialement à un passage (5) de forme cylindrique creuse dans la broche de travail (4), et
- la buse tubulaire (10) est entourée du côté de l'entrée au moins sur une partie de sa longueur axiale par un tube de reprise (12),
**caractérisé en ce que**
la buse tubulaire (10) présente au niveau de son extrémité d'entrée un diamètre extérieur plus petit que le diamètre intérieur du tube de reprise (12), et
le diamètre intérieur et le diamètre extérieur de la douille d'accouplement (11) au niveau de son extrémité de sortie sont configurés de telle sorte que l'extrémité de la douille d'accouplement (11) puisse être déplacée dans la direction axiale dans l'espace intermédiaire (14) en forme de fente annulaire entre le tube de reprise (12) et la buse tubulaire (10).

2. Porte-outil selon la revendication 1, **caractérisé en ce que** dans un système à un canal, la douille d'accouplement (11) est raccordée par le biais du passage (5) de forme cylindrique creuse dans la broche de travail (4) à une alimentation pour un mélange d'huile et d'air.

3. Porte-outil selon la revendication 1, **caractérisé en ce que** dans un système à deux canaux, l'extrémité d'une lance de fluide (6) est disposée dans la douille d'accouplement (11), de l'huile provenant de la lance (6) et de l'air provenant du canal annulaire entre la lance (6) et la douille d'accouplement (11) étant distribués dans la buse tubulaire (10) formant une chambre de mélange.

4. Porte-outil selon l'une quelconque des revendications 1 à 3, **caractérisé en ce que** l'extrémité de sortie du tube de transfert (8) est entourée par une douille d'adaptateur (9) qui peut être réglée axialement.

5. Machine-outil comprenant une broche de travail qui présente un passage axial pour un fluide réfrigérant et/ou lubrifiant et à laquelle est raccordé un porte-outil (1) selon l'une quelconque des revendications 1 à 4, dans laquelle la douille d'accouplement (11) est raccordée concentriquement au passage (5) de forme cylindrique creuse de la broche de travail (4).
